# FASCICULE DE BREVET EUROPEEN

(11) **EP 0 966 049 B1**
(45) Date de publication et mention de la délivrance du brevet: **29.07.2015**
(21) Numéro de dépôt: 99440142.0
(22) Date de dépôt: 16.06.1999
(51) Int. Cl.: H02N 2/16, H02N 2/14, H02N 2/10

(54) **Moteur piézo-électrique avec capteur de position intégré**
Piezoelektrischer Motor mit integriertem Positionssensor
Piezo-electric motor with integrated position sensor

(30) Priorité: 18.06.1998 FR 9807810
(43) Date de publication de la demande: 22.12.1999
(73) Titulaire: BorgWarner, Inc., Auburn Hills, MI 48326-2872 (US)
(72) Inventeur: Armiroli, Jean, 06310 Beaulieu sur Mer (FR); Sauzade, Jean-Denis, 06130 Grasse (FR)
(74) Mandataire: Littolff, Denis

(56) Documents cités:
- EP-A- 0 551 096
- EP-A1- 1 061 638
- US-A- 5 473 215
- PATENT ABSTRACTS OF JAPAN vol. 015, no. 258 (E-1084), 28 juin 1991 (1991-06-28) & JP 03 082380 A (SHINJI KAWASE), 8 avril 1991 (1991-04-08)

## Description

La présente invention concerne un moteur piézo-électrique rotatif doté de moyens de foumir des informations sur la position de son rotor par rapport à celle de son stator. Elle concerne également un actionneur rotatif muni d'un tel moteur piézo-électrique à capteur de position intégré.

De fait, l'idée à la base de l'invention repose sur les particularités techniques des moteurs piézo-électriques, auxquels on adapte un ou plusieurs éléments permettant le calcul de la position du rotor par rapport à celle du stator. Elle conduit en pratique à une intégration poussée, car le ou lesdits éléments fonctionnent selon le principe même des moteurs, c'est-à-dire à l'aide de composants en céramique piézo-électrique, mais en sens inverse. Dans certaines applications, l'invention pourrait être considérée comme un capteur de position motorisé.

Le principe du moteur est de transformer un signal de nature électrique en une déformation mécanique, alors que celui qui est à la base de l'invention permet la restitution d'un signal électrique reflétant l'état vibratoire du moteur, lequel contient plusieurs informations pouvant être utilisées par exemple dans un actionneur rotatif.

Un moteur piézo-électrique intégrant un capteur de position reposant sur le même principe dispose en outre de caractéristiques lui conférant des qualités particulièrement adaptées à un fonctionnement dans un actionneur rotatif utilisable dans des environnements sévères, par exemple dans le domaine de l'automobile pour le contrôle du déplacement d'un volet d'admission d'air permettant de régler la puissance du moteur du véhicule. Les critères exigés pour le capteur de position sont notamment :
- la possibilité d'utilisation sous une température de fonctionnement sévère (de l'ordre de -40° C à +140° C),
- une très bonne linéarité (de l'ordre de ±0,1% ou inférieure),
- une très bonne répétabilité (de l'ordre de 0,1% ou inférieure),
- une résolution angulaire fine (de l'ordre de 0,1°),
- une vitesse de rotation importante (de l'ordre de 1800°/s),
- une durée de vie importante (de l'ordre de 3 x 10⁶ cycles, avec un cycle étant égal à un aller-retour sur 90° d'angle).

Dans cette application particulière, une unité centrale de commande permet de commander la position du volet d'admission d'air afin de régler la puissance du moteur. La position du volet doit être précise afin de prendre en compte tous les paramètres qui régissent l'optimisation de l'alimentation des cylindres en fonction des conditions de conduite d'une automobile. Le rôle de l'actionneur est alors de recevoir les ordres de l'unité de commande, et de positionner le volet conformément à des ordres en respectant les spécifications de la fonction (rapidité, précision, couple élevé, malgré un dispositif peu volumineux et de faible poids).

Les paramètres de fonctionnement requis sont par conséquent d'un niveau très élevé.

Une configuration classique, pour le même genre d'application, pourrait être basée sur un moteur à courant continu, doté selon le cas d'un train réducteur à engrenage. La précision de positionnement requise implique bien entendu l'existence d'un capteur de position renvoyant un signal permettant de réaliser un asservissement de position classique. Les potentiomètres de recopie traditionnels ne sont cependant pas assez performants, notamment au titre de la température, de la vitesse de rotation et de la durée de vie pour être utilisés.

Des capteurs magnétostrictifs correspondraient mieux au cahier des charges, mais ils sont coûteux et volumineux.

Selon une autre possibilité, les actionneurs peuvent utiliser des moteurs couples qui fonctionnent, comme pour les moteurs à courant continu, avec un couple résistant réalisé par un ressort de rappel. Le courant règle une position du ressort mais il faut quand même rajouter un capteur de position donnant un signal électrique (type potentiomètre de recopie ou capteur magnétique avec ou sans contact) réalisant une boucle fermée d'asservissement.

Enfin, il existe des configurations à moteurs pas à pas, assurant cependant eux aussi la sécurité du positionnement au moyen d'un capteur de position réalisant ladite boucle fermée. Le moteur pas à pas reçoit de l'unité de commande le nombre d'impulsions nécessaire pour se déplacer du nombre de pas voulu pour atteindre sa position. Il n'a donc théoriquement pas besoin de capteur de position. Cela ne fonctionne cependant qu'à condition que la position initiale de l'actionneur soit connue.

Les systèmes utilisant des actionneurs à moteur pas à pas sont dès lors obligés d'effectuer dès leur mise sous tension une phase de mise à zéro. Pendant cette phase, l'unité de commande fait tourner l'actionneur pendant une durée légèrement supérieure au temps nécessaire pour aller d'une butée à l'autre, et dans un sens donné. Après cette phase, l'unité de commande sait donc parfaitement dans quelle position se trouve l'actionneur et le volet d'admission d'air correspondant, et le fonctionnement normal peut commencer. Les inconvénients de cette méthode apparaissent clairement : le temps passé par l'actionneur à perdre les pas alors qu'il est déjà en butée est perdu, et l'admission d'air ne commence à fonctionner qu'avec du retard. De plus, l'actionneur, en vibrant lorsqu'il arrive en butée, fait du bruit.

Par ailleurs, le blocage éventuel du volet d'admission d'air par exemple du fait du givre, du gel ou d'un quelconque autre blocage mécanique est ignoré par l'unité de commande, qui continue à envoyer ses ordres alors que la position initiale a été perdue. Il y a alors dysfonctionnement du réglage électrique de l'admission d'air. C'est la raison pour laquelle il faut également rajouter un capteur de position, permettant encore de travailler en boucle fermée.

L'un des objectifs de l'invention est de supprimer les inconvénients précités, en permettant notamment de détecter la position angulaire ou éventuellement le blocage de l'actionneur, ainsi que toute perte de position due à une perte de synchronisation entre les ordres reçus et le mouvement. Elle permet aussi d'arrêter le moteur rapidement si nécessaire.

Un autre objectif de l'invention est de réaliser ceci sans augmenter la complexité du système, et en restant par conséquent dans un cadre économique raisonnable.

Outre les critères présentés ci-dessus, l'actionneur basé sur un moteur piézo-électrique selon l'invention est conçu de manière à remplir de façon particulièrement avantageuse toute fonction au sein d'un environnement même exigeant, parce qu'il est :
- rapide,
- précis,
- doté d'un couple élevé, notamment à basse vitesse,
- peu volumineux,
- de faible poids,
- silencieux,
- fonctionnel sans réducteur,
- dépourvu de problèmes de compatibilité électromagnétique ; et
- doté d'une fonction de diagnostic.

Par rapport à ses devancières de l'art antérieur, l'invention réalise en outre cette dernière fonction essentielle conduisant à une possibilité de diagnostic : elle émet en effet à destination de l'unité centrale électronique de commande, un message signalant soit la perte de position, soit le blocage.

Cette fonction de diagnostic est intéressante à double titre : d'une part lors de la fabrication, par exemple dudit système de réglage électrique de l'admission d'air, puisqu'elle permet d'en vérifier rapidement le bon fonctionnement, et d'autre part au cours du fonctionnement normal, puisque tout blocage est identifié par l'unité centrale de commande, qui peut alors adopter des stratégies de secours adaptées.

De manière générale, l'invention concerne donc un procédé de calcul électronique de la position angulaire d'un rotor par rapport à un stator équipé d'au moins une couche céramique piézo-électrique alimentée par des signaux sinusoïdaux, lesdits rotor et stator appartenant à un moteur piézo-électrique rotatif, caractérisé en ce qu'il est basé sur les états vibratoires respectifs du rotor et du stator, et en ce qu'il comporte les étapes suivantes :
- générer un signal sinusoïdal par un dispositif intégré dans le rotor ;
- comparer la phase dudit signal avec un signal sinusoïdal de référence reflétant l'état vibratoire du stator ;
- calculer la position relative ou absolue de l'un par rapport à l'autre sur une longueur d'onde commune aux signaux sinusoïdaux ;
- détecter des pertes de positionnement ou de blocages de l'un par rapport à l'autre.

L'invention concerne également un moteur piézo-electrique rotatif mettant en oeuvre le procédé ci-dessus.

Plus précisément, ledit dispositif intégré au rotor est un capteur piézo-électrique subissant la déformation transmise par le stator excité sinusoïdalement par les céramiques piézo-électriques du moteur, et émettant un signal sinusoïdal déphasé par rapport à un signal de référence statorique.

Ainsi, on utilise les potentialités techniques mêmes du moteur pour y inclure un capteur, ce qui revient à optimiser la double configuration moteur / capteur, notamment en préservant sa compacité sans qu'il y ait d'augmentation corollaire du coût de fabrication.

Il ne s'agit en l'occurrence nullement d'un système de lecture de la position rapporté sur le moteur, comme c'est le cas dans presque toutes les autres configurations, mais d'un dispositif inhérent au moteur, qui utilise très simplement la réversibilité du phénomène technique sur lequel repose ledit moteur.

De préférence, le capteur piézo-électrique rotorique est fixé sur la périphérie du rotor.

Le capteur rotorique fournit donc l'un des termes de la comparaison à effectuer pour connaître soit la position angulaire du rotor relativement au stator, soit l'existence d'un problème.

Selon une possibilité, le signal de référence statorique constituant l'autre terme de la comparaison est l'une des tensions sinusoïdales d'entrée appliquées aux céramiques piézo-électriques communiquant une déformation au stator.

Cette solution va dans le sens de la plus grande simplification technique, et elle est économiquement la plus favorable.

Selon une variante, le second terme de la comparaison peut être fourni par les céramiques piézo-électriques équipant le stator, qui comportent elles-mêmes un capteur piézo-électrique constitué d'un élément fonctionnant en sens inverse, c'est-à-dire non soumis à un signal électrique sinusoïdal, mais fournissant un signal sinusoïdal en réponse à une déformation imprimée par les éléments polarisés.

L'emplacement et la forme dudit capteur dépendent de la structure du moteur piézo-électrique.

S'il s'agit d'un moteur à onde progressive, le capteur piézo-électrique statorique est placé entre deux groupes de portins de la couche céramique soumis à des tensions électriques sinusoïdales différentes.

Pour mémoire, on rappelle que dans ces moteurs, une céramique piézo-électrique en anneau est polarisée alternativement positivement et négativement sur des portions consécutives formant des groupes séparés les uns des autres. Sur n portions consécutives, la céramique va subir une déformation inverse à l'endroit des + et à l'endroit des - lorsque l'on applique la même tension (par exemple un signal électrique sinusoïdal) sur une face de ces n portions (l'autre face est à 0 volt). Il en résulte une déformation correspondante du stator.

Les n autres portions des autres groupes sont également soumises à un signal électrique et se déforment de la même manière.

Dans le cas particulier où il y a deux groupes de n céramiques, ceux-ci sont décalés dans l'espace de 1/4 de longueur d'onde mécanique. Les signaux a et b sont eux-mêmes décalés dans le temps de 90° électrique et sont du type sin(ωt) et cos(ωt).

On crée ainsi deux ondes stationnaires décalées dans l'espace et dans le temps, résultant en une onde vibratoire progressive. En pratique, le point de contact avec le rotor décrit une ellipse à haute fréquence N (ω = 2 x n x N) qui permet l'entraînement dudit rotor, la composante tangentielle de la vibration transmise entraînant la rotation alors que la composante normale (axiale) décale les surfaces en contact du rotor et du stator, permettant ainsi la transmission du mouvement de rotation et la transmission du couple.

En fait, le principe du moteur à onde progressive consiste à générer une onde progressive de flexion par superposition de deux ondes stationnaires. Les secteurs de la céramique sont positionnés suivant une périodicité de λ/2 (λ étant la longueur d'onde des signaux sinusoïdaux).

La fréquence est optimisée pour un fonctionnement à la résonance afin d'augmenter l'amplitude des vibrations et ainsi d'augmenter la puissance du moteur.

Afin de régler au mieux cette fréquence d'utilisation (au dessus de 20 kHz pour être dans le domaine ultrasonore et donc supprimer le bruit) qui varie en fonction de plusieurs paramètres (température, phase de démarrage, charge appliquée...), on dispose ladite portion de céramique statorique restituant un signal électrique entre les deux groupes de n céramiques. Cette portion de céramique (capteur statorique) travaille en sens inverse des autres. En effet, la vibration tournante déforme le capteur qu'elle forme et il y a création d'un signal électrique, dont l'exploitation permet notamment à l'unité centrale électronique de corriger par exemple la fréquence de commande.

Selon un second type de moteur possible, les moteurs à rotation de mode, le capteur piézo-électrique statorique est une couche céramique piézo-électrique annulaire empilée à une extrémité de la superposition de couches de céramiques piézo-électriques soumises à des tensions électriques sinusoïdales, provoquant la déformation du stator.

Dans ces moteurs à rotation de mode, le principe est légèrement différent, mais il y a toujours création d'une ellipse tournante qui entraîne le rotor. Le stator fléchit en continu en tournant, et on retrouve le décalage des céramiques dans l'espace et le décalage des signaux électriques dans le temps (l'un du type cos(ωt) et l'autre du type sin(ωt)), créant un mode de vibration tournant.

La configuration spatiale est cependant sensiblement différente, puisque les céramiques sont superposées par groupes décalés de 90° dans l'espace, chaque céramique étant soumise à une tension sinusoïdale égale à celles des autres céramiques du même groupe spatial.

En fait, le principe du moteur à rotation de mode consiste à utiliser une structure vibrant sous un mode de flexion dont on fait tourner la déformée.

Le capteur de position intégré au moteur piézo-électrique défini par l'invention peut fonctionner dans de multiples applications, et notamment, à titre préférentiel, pour constituer un actionneur rotatif puisqu'il est combiné audit moteur qui devient du même coup l'organe principal de l'actionneur.

Cet actionneur peut au surplus intégrer un circuit électrique commandant le moteur piézo-électrique. Cela n'altère pratiquement pas sa compacité.

On obtient en définitive un actionneur compact présentant des caractéristiques de haut niveau.

L'invention va à présent être décrite plus en détail, en référence aux figures, pour lesquelles :
- la figure 1 est une vue éclatée montrant schématiquement les composants fixés au stator dans un moteur à onde progressive ;
- la figure 2 représente un schéma illustratif de fonctionnement pour ce moteur ;
- la figure 3 est une vue en trois dimensions d'un stator déformé ;
- la figure 4 donne l'emplacement du capteur statorique dans un moteur à onde progressive ;
- la figure 5 représente une configuration schématique possible de moteur à rotation de mode ;
- les figures 6a et 6b précisent la représentation de la figure 5 ; et
- la figure 7 est une coupe d'un actionneur basé sur un moteur piézo-électrique à onde progressive.

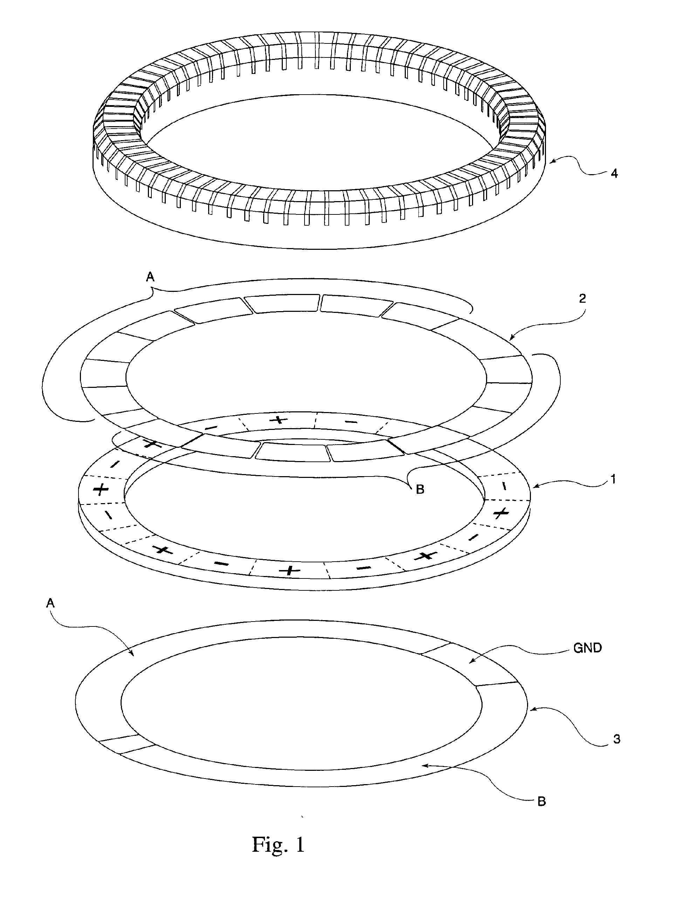

La vue éclatée de la figure 1 montre l'étage de céramique piézo-électrique (1) entouré de deux anneaux (2, 3) par lesquels sont appliqués les signaux électriques sinusoïdaux permettant d'obtenir une déformation mobile à transmettre au stator (4) proprement dit.

Dans cette configuration, les portions (+) et (-) forment deux groupes (A, B) séparés par des zones en vis-à-vis, dont les longueurs respectives totalisent une longueur d'onde, et permettent un décalage d'un quart de période mécanique desdites portions.

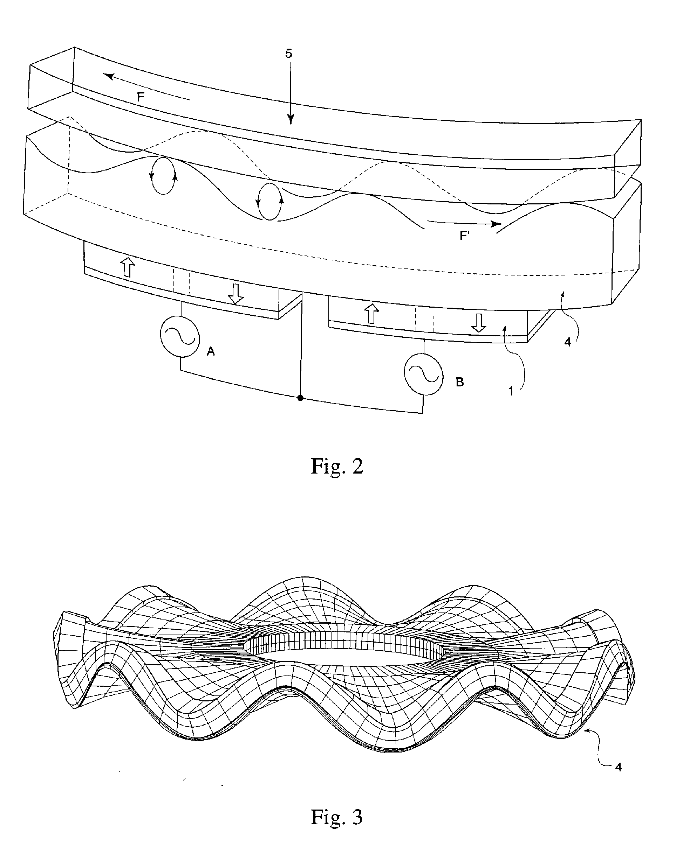

La figure 2 explicite le fonctionnement électrique de cette configuration de moteur piézo-électrique à onde progressive.

Le rotor (5) y apparaît au-dessus du stator (4), comprimé contre lui, la flèche (F) matérialisant le sens de son déplacement. Les deux groupes (A, B) sont représentés d'une manière simplifiée, chacun comportant deux portions de polarité opposée, auxquelles on applique des signaux en quadrature électrique Ccos(ωt) et Csin(ωt).

Les ellipses constituant le déplacement des points de contact apparaissent également dans cette figure, ainsi que le mouvement de l'onde, symbolisé par la flèche (F'), qui se déplace en sens contraire au sens du déplacement du rotor (5).

La figure 3 donne une idée de la déformation qui se propage dans le stator (4), vu en instantané.

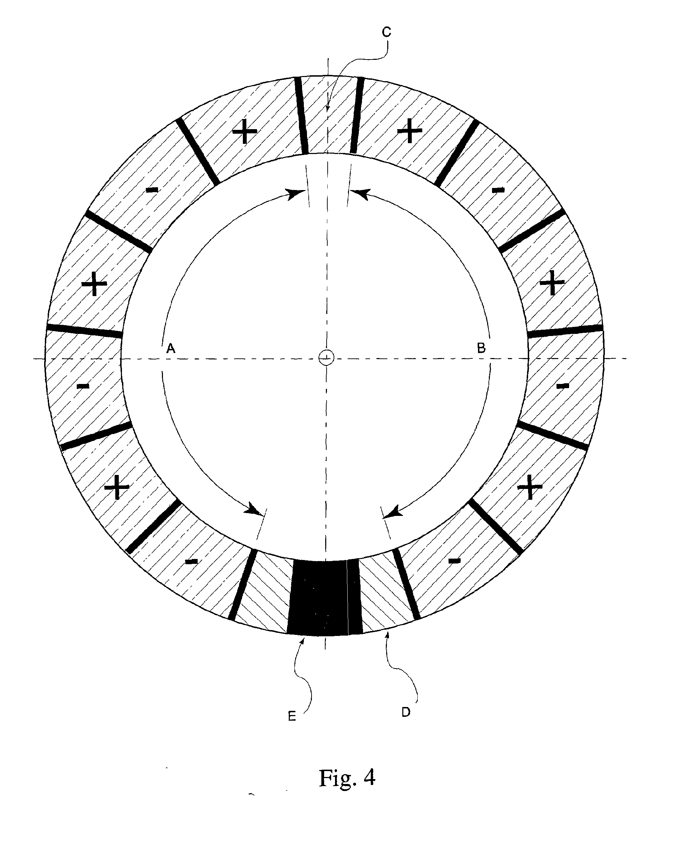

La figure 4 illustre plus clairement la répartition des groupes mentionnée lors du descriptif de la figure 1, et constitue en fait une vue de dessus de la céramique piézo-électrique qui y est représentée.

Les portions ou électrodes polarisées positivement ou négativement alternent dans les deux groupes A et B et sont séparées par deux intervalles (C, D) de grandeur inégale telles que définies auparavant. La zone de séparation (D) la plus grande comporte le capteur piézo-électrique (E) statorique.

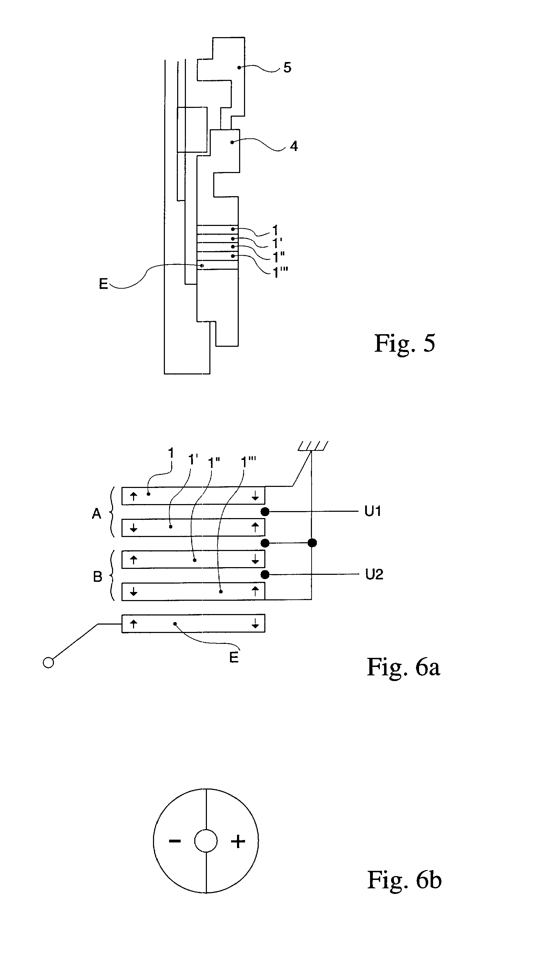

Les figures 5, 6a et 6b concernent un moteur piézo-électrique à rotation de mode, qui présente une symétrie rotative telle qu'en figure 5, on n'a représenté qu'une moitié de configuration. Le rotor (5) est toujours au contact du stator (4), mais la structure change au niveau des céramiques piézo-électriques : celles-ci sont disposées sous forme d'anneaux superposés (1, 1', 1", 1"') sous le stator (4), sous lequel elles sont précontraintes par compression.

Le schéma de polarisation global apparaît en figure 6a, alors que la configuration individuelle est schématisée en figure 6b.

En partie inférieure de l'empilement, le capteur piézo-électrique (E) statorique obéit à la même géométrie que les précédents niveaux.

Dans les deux cas, comme on l'a mentionné auparavant, la base de l'invention consiste à intégrer le capteur à l'intérieur du moteur, puis à utiliser l'information contenue dans l'état vibratoire du stator et du rotor. On détermine la position angulaire du rotor par rapport à une référence située sur le stator. L'angle ainsi défini est proportionnel au déphasage entre le signal de référence et le signal issu du capteur situé dans le rotor. Le signal de référence statorique est fourni soit par la ou une couche céramique du stator, ainsi que montré auparavant, soit par le signal (U1, U2) d'une des deux voies électriques d'alimentation du moteur qui est transmise au stator.

Dans le cas d'un moteur à onde progressive, l'onde élastique progressive en un point du stator a pour expression Uz1 = A1 cos(ωt - nθ1). En un point du rotor, si celui-ci suit passivement l'onde élastique générée dans le stator, l'expression de l'onde élastique sera : Uz2 = A2 cos(ωt - nθ2). La position du rotor étant proportionnelle à Δϕ, il suffit de mesurer la différence de phase entre les deux signaux.

La différence de phase Δϕ = n(θ1 - θ2) est nulle modulo 2π/n, si le moteur fonctionne sur le mode n, c'est-à-dire avec l'équivalent de n longueurs d'onde réparties sur la circonférence, et présente donc n passages à la valeur nulle de Δϕ.

Le moteur à rotation de mode possède l'avantage de n'avoir qu'une longueur d'onde sur son pourtour. Le comptage des passages à 0 s'en trouve simplifié, et correspond en fait aux nombres de tours.

L'information donnée par le capteur de position intégré peut être de nature relative (capteur incrémental) ou absolue.

En effet, l'angle est défini par le déphasage entre le signal de référence statorique et un signal issu du capteur rotorique. Dans le premier cas, on déduit la position d'une position mesurée auparavant : on mesure en fait le déplacement depuis l'instant où un signal statorique est émis. Dans le cas du moteur à onde progressive par exemple à cinq longueurs d'onde sur un tour (cinq modes) ou encore à sept longueurs d'onde sur un tour (sept modes), il faut évidemment tenir compte des passages d'un mode à l'autre car la différence de phase s'annule au passage d'un mode à l'autre. Il n'est par conséquent pas possible de reconnaître deux positions espacées de 51,4° pour un moteur à onde progressive à sept modes, car cela correspond à la même différence de phase.

Dans le second cas (lecture absolue), la connaissance de la position absolue ne peut également être détectée que sur une longueur d'onde. En effet, un seul angle correspond à une valeur de déphasage, et la position sur un mode est définie au montage :
- par exemple pour un moteur à onde progressive à sept modes, le capteur peut donner une position absolue sur 51,4° ;
- pour un moteur à rotation de mode, pour lequel il n'y a qu'un seul mode sur un tour, le capteur peut donner une position absolue sur un tour complet (360°).

On peut obtenir la position absolue sur un mode (donc sur un tour dans le cas d'un moteur à rotation de mode) dès que le courant passe, même sans mouvement du rotor : le signal de référence statorique est en effet disponible (signal vibratoire) avant le seuil de mouvement du rotor.

On pourra cependant, en cas de besoin, également obtenir le signal statorique après un petit mouvement du rotor. A 20kHz, le déplacement nécessaire est cependant très faible, et la position est détectée quasi instantanément, ce qui correspond à un signal de capteur de position quasiment absolu.

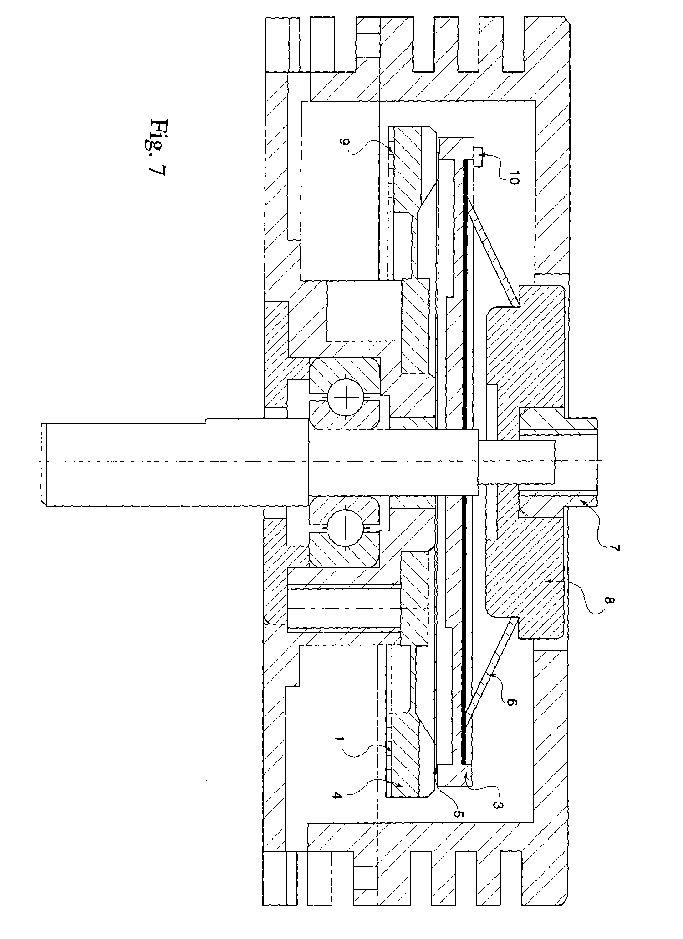

La figure 7 montre une coupe d'un actionneur basé sur un moteur à onde progressive, la céramique piézo-électrique (1) étant bien entendu au contact du stator (4) lequel agit sur le rotor (5) sur lequel s'exerce la force de rappel d'un ressort (6) le plaquant contre le stator (4).

Ladite figure montre encore des éléments mécaniques classiques tels qu'un écrou de serrage (7) rotor / stator, une pièce de liaison (8), ainsi que les éléments constituant plus spécifiquement l'invention : le capteur statorique (9) et le capteur rotorique (10).

Parmi les avantages résiduels de l'invention que l'on peut encore citer, qui sont de nature à être plus clairement compris à la suite de la description détaillée qui vient d'être faite, on peut citer le fait que l'intégration du capteur permet de supprimer la nécessité de capteurs de fin de course dans certains systèmes du type de celui de l'exemple préférentiel. En effet, le capteur de position intégré indique avec suffisamment de précision les fins de course et réalise ainsi lui-même ces fonctions.

Ceci permet de réduire encore la complexité et les coûts de certaines configurations.

De plus, ladite intégration permet de réduire l'usure de la couche de friction rotor / stator du moteur piézo-électrique lorsqu'il y a blocage, car il y a immédiatement détection de celui-ci, et arrêt du moteur ou diagnostic du problème suivi d'une tentative de le résoudre.

A l'inverse, si le blocage n'est pas détecté lorsque le moteur piézo-électrique est commandé par un système électronique, il y a usure au niveau du ou des points de contact qui vibrent alors en statique, d'où l'avantage substantiel procuré par la possibilité de diagnostic offerte par l'invention par détection d'une variation de fréquence.

Enfin, le capteur intégré permet le cas échéant de supprimer un ressort de rappel, notamment dans l'exemple du réglage d'un volet d'admission d'air dans une automobile. Un tel ressort, utilisé pour faciliter son positionnement, n'est en effet plus nécessaire du fait des qualités intrinsèques de l'actionneur.

Le capteur remplace en effet le ressort pour cette fonction, car il donne notamment une position plus précise et surtout un signal électrique qui permet un fonctionnement en boucle fermée du système.

Les exemples ci-dessus ne sont bien sûr pas limitatifs de l'invention, qui est définie par les revendications suivantes.

## Revendications

1. Procédé de calcul électronique de la position angulaire d'un rotor (5) mobile par rapport à un stator (4) équipé d'au moins une couche céramique (1) piézo-électrique alimentée par des signaux sinusoïdaux, lesdits rotor (5) et stator (4) appartenant à un moteur piézo-électrique rotatif, **caractérisé en ce qu'**il est basé sur les états vibratoires respectifs du rotor (5) et du stator (4), et **en ce qu'**il comporte les étapes suivantes :
- générer un signal sinusoïdal par un dispositif intégré dans le rotor ;
- comparer la phase dudit signal avec un signal sinusoïdal de référence reflétant l'état vibratoire du stator (4) ;
- calculer la position relative ou absolue de l'un par rapport à l'autre sur une longueur d'onde commune aux signaux sinusoïdaux ;
- détecter des pertes de positionnement ou de blocage de l'un par rapport à l'autre.

2. Moteur piézo-électrique rotatif mettant en oeuvre le procédé selon la revendication 1, **caractérisé en ce que** le dispositif intégré au rotor (5) est un capteur piézo-électrique (10) subissant la déformation transmise par le stator (4) excité sinusoïdalement par des céramiques (1, 1', 1") piézo-électriques du moteur, le signal sinusoïdal émis par ledit capteur piézo-électrique (10) étant déphasé par rapport à un signal de référence statorique.

3. Moteur piézo-électrique rotatif selon la revendication précédente, **caractérisé en ce que** le capteur piézo-électrique (10) rotorique est fixé sur la périphérie du moteur.

4. Moteur piézo-électrique rotatif selon l'une des revendications 2 et 3, **caractérisé en ce que** le signal de référence statorique est l'une des tensions sinusoïdales d'entrée appliquées aux céramiques piézo-électriques (1, 1', 1") communiquant une déformation au stator.

5. Moteur piézo-électrique rotatif selon l'une quelconque des revendications 2 et 3, **caractérisé en ce que** les céramiques piézo-électriques (1, 1', 1") équipant le stator (4) comportent un capteur piézo-électrique (9) constitué d'un élément fonctionnant en sens inverse, c'est-à-dire non soumis à un signal électrique sinusoïdal, mais fournissant un signal sinusoïdal en réponse à une déformation imprimée par les éléments polarisés, qui peut être le signal de référence statorique.

6. Moteur piézo-électrique à onde progressive selon la revendication précédente, **caractérisé en ce que** le capteur piézo-électrique (E), qui peut fournir le signal de référence statorique, est placé entre deux groupes (A, B) de portions polarisées de céramiques soumis à des tensions électriques sinusoïdales différentes.

7. Moteur piézo-électrique à rotation de mode selon la revendication 5, **caractérisé en ce que** le capteur piézo-électrique statorique (E), qui peut fournir le signal de référence statorique, est une couche céramique piézo-électrique cylindrique empilée à une extrémité de la superposition de couches céramiques piézo-électriques (1, 1', 1") soumises à des tensions électriques sinusoïdales provoquant la déformation du stator (4).

8. Actionneur rotatif **caractérisé en ce qu'**il est basé sur un moteur piézo-électrique intégrant un capteur de position angulaire selon l'une quelconque des revendications 2 à 7.

9. Actionneur rotatif selon la revendication précédente, **caractérisé en ce qu'**il comporte un circuit électronique intégré prévu pour commander le moteur piézo-électrique.

## Patentansprüche

1. Verfahren zur elektronischen Berechnung der Winkelposition eines Rotors (5), der in Bezug zu einem Stator (4) beweglich ist, der mit mindestens einer piezoelektrischen Keramikschicht (1) versehen ist, die von Sinussignalen gespeist wird, wobei der Rotor (5) und der Stator (4) einem piezoelektrischen Rotationsmotor angehören, **dadurch gekennzeichnet, dass** es auf den jeweiligen Schwingungszuständen des Rotors (5) und des Stators (4) basiert, und dass es die folgenden Schritte umfasst:
- Erzeugen eines Sinussignals durch eine in den Rotor integrierte Vorrichtung;
- Vergleichen der Phase des Signals mit einem Referenzsinussignal, das den Schwingungszustand des Stators (4) wiedergibt;
- Berechnen der relativen oder absoluten Position zueinander auf einer den Sinussignalen gemeinsamen Wellenlänge;
- Erfassen der Positionier- oder Blockierverluste zueinander.

2. Piezoelektrischer Rotationsmotor, der das Verfahren nach Anspruch 1 einsetzt, **dadurch gekennzeichnet, dass** die in den Rotor (5) integrierte Vorrichtung ein piezoelektrischer Sensor (10) ist, der der Deformation ausgesetzt ist, die vom Stator (4) übertragen wird, der von piezoelektrischen Keramiken (1, 1, 1") des Motors sinusmäßig erregt wird, wobei das vom piezoelektrischen Sensor (10) entsandte Sinussignal in Bezug zu einem Referenzstatorsignal phasenversetzt ist.

3. Piezoelektrischer Rotationsmotor nach dem vorhergehenden Anspruch, **dadurch gekennzeichnet**, das der piezoelektrische Rotorsensor (10) an der Peripherie des Motors befestigt ist.

4. Piezoelektrischer Rotationsmotor nach einem der Ansprüche 2 und 3, **dadurch gekennzeichnet, dass** das Referenzstatorsignal eine der Sinuseingangsspannungen ist, die an die piezoelektrischen Keramiken (1, 1, 1") angelegt werden, die eine Deformation an den Stator weitergeben.

5. Piezoelektrischer Rotationsmotor nach einem der Ansprüche 2 und 3, **dadurch gekennzeichnet, dass** die piezoelektrischen Keramiken (1, 1, 1"), mit denen der Stator (4) ausgestattet ist, einen piezoelektrischen Sensor (9) umfassen, der von einem Element gebildet ist, das im umgekehrten Sinn funktioniert, d.h. das keinem elektrischen Sinussignal ausgesetzt ist, sondern das als Antwort auf eine von den polarisierten Elementen vorgegebene Deformation ein Sinussignal liefert, das das Referenzstatorsignal sein kann.

6. Piezoelektrischer Wanderwellenmotor nach dem vorhergehenden Anspruch, **dadurch gekennzeichnet, dass** der piezoelektrische Sensor (E), der das Referenzstatorsignal liefern kann, zwischen zwei Gruppen (A, B) von polarisierten Keramikabschnitten angeordnet ist, die unterschiedlichen elektrischen Sinusspannungen ausgesetzt sind.

7. Piezoelektrischer Motor mit Modusrotation nach Anspruch 5, **dadurch gekennzeichnet, dass** der piezoelektrische Statorsensor (E), der das Referenzstatorsignal liefern kann, eine zylindrische piezoelektrische Keramikschicht ist, die an einem Ende der Stapelung von piezoelektrischen Keramikschichten (1, 1, 1"), die elektrischen Sinusspannungen ausgesetzt sind, die zur Deformation des Stators (4) führen, aufgestapelt ist.

8. Drehantriebselement, **dadurch gekennzeichnet, dass** es auf einem piezoelektrischen Motor basiert, der einen Winkelpositionssensor nach einem der Ansprüche 2 bis 7 umfasst.

9. Drehantriebselement nach dem vorhergehenden Anspruch, **dadurch gekennzeichnet, dass** es eine integrierte elektronische Schaltung umfasst, die dazu vorgesehen ist, den piezoelektrischen Motor zu steuern.

## Claims

1. Method for electronic calculation of the angular position of a mobile rotor (5) with respect to a stator (4) equipped with at least one ceramic piezo-electric layer (1) powered by sinusoidal signals, the said rotor (5) and stator (4) belonging to a rotary piezo-electric motor, **characterized in that** it is based on the respective vibrational states of the rotor (5) and of the stator (4), and **in that** it comprises the following steps:
- generate a sinusoidal signal by a device integrated into the rotor;
- compare the phase of the said signal with a sinusoidal reference signal reflecting the vibrational state of the stator (4);
- calculate the relative or absolute position of the one with respect to the other over a wavelength common to the sinusoidal signals;
- detect positioning or blocking losses of the one with respect to the other.

2. Rotary piezo-electric motor implementing the method according to Claim 1, **characterized in that** the device integrated into the rotor (5) is a piezo-electric sensor (10) subjected to the deformation transmitted by the stator (4) excited sinusoidally by piezo-electric ceramics (1, 1', 1") of the motor, the sinusoidal signal emitted by the said piezo-electric sensor (10) being out of phase with respect to a stator reference signal.

3. Rotary piezo-electric motor according to the preceding claim, **characterized in that** the rotor piezo-electric sensor (10) is fixed to the periphery of the motor.

4. Rotary piezo-electric motor according to either of Claims 2 and 3, **characterized in that** the stator reference signal is one of the sinusoidal input voltages applied to the piezo-electric ceramics (1, 1', 1") communicating a deformation to the stator.

5. Rotary piezo-electric motor according to either one of Claims 2 and 3, **characterized in that** the piezo-electric ceramics (1, 1', 1") equipping the stator (4) comprise a piezo-electric sensor (9) consisting of an element operating in the reverse direction, in other words not subjected to a sinusoidal electrical signal, but supplying a sinusoidal signal in response to a deformation imposed by the biased elements, which can be the stator reference signal.

6. Travelling-wave piezo-electric motor according to the preceding claim, **characterized in that** the piezo-electric sensor (E), which supplies the stator reference signal, is placed between two groups (A, B) of biased portions of ceramics subjected to different sinusoidal electrical voltages.

7. Rotating-mode motor according to Claim 5, **characterized in that** the stator piezo-electric sensor (E), which supplies the stator reference signal, is a stacked cylindrical piezo-electric ceramic layer at one end of the superposition of piezo-electric ceramic layers (1, 1', 1") subjected to sinusoidal electrical voltages causing the deformation of the stator (4).

8. Rotary actuator **characterized in that** it is based on a piezo-electric motor integrating an angular position sensor according to any one of Claims 2 to 7.

9. Rotary actuator according to the preceding claim, **characterized in that** it comprises an integrated electronic circuit provided for controlling the piezo-electric motor.
